# EUROPEAN PATENT APPLICATION

(11) **EP 0 967 340 A2**
(43) Date of publication of application: **29.12.1999**
(21) Application number: 99650058.3
(22) Date of filing: 23.06.1999
(51) Int. Cl.: E04B 1/80

(54) **An insulating board**

(30) Priority: 24.06.1998 IE 980505
(71) Applicant: Kingspan Research and Developments Limited, Kingscourt, County Cavan (IE)
(72) Inventor: Rochefort, Malcom, Kingspan Res. and Dvlp. Limited, Kingscourt, County Cavan (IE); McCabe, Thomas, Kingspan Res. and Dvlp. Limited, Kingscourt, County Cavan (IE)
(74) Representative: O'Brien, John Augustine

(57) **Abstract**

A fire retardant insulating board 1 comprises a foam core 2 having facings 3, 4 on both faces thereof. The foam core is reinforced by a glass fiber scrim 5 having a weight of from 8 to 24, preferably 10 to 20 and ideally approximately 13.6 g/m² of board. To produce the board 1 in a continuous manufacturing process the facings 3, 4 with the scrim 5 and foam reactants are passed under a nip bar 30 to thoroughly wet out the scrim 5 before allowing the foam to expand.

## Description

The invention relates to a fire retardant insulating board of the type comprising a rigid foam core having facings of fire retardant material.

In order to improve the fire retardant properties of such insulating board it is known to reinforce the core with randomly arranged glass fibers. However, such fibers are generally high-loft glass fibers which are expensive both in terms of raw materials and production costs. In some cases fibers are difficult to disperse in the foam core leading to uneven distribution. Such uneven distribution can lead to local sites which are excessively reinforced and/or un-reinforced and can consequently provide local areas of weakness to foam breaking or cracking and/or delamination.

US-A-4118533 describes a process for producing a structural laminate using a mat of glass fibers in which the fibers are arranged in layers, the fibers in each layer being straight, long and parallel and the fibers in each layer being at an acute angle to the fibers in the next adjacent layer. The fiber glass mat has facing sheets applied to each face and a foam-forming mixture is applied between the facing sheets. On expansion of the foam-forming mixture the mat of glass fibers is said to expand. However, fiber glass mats of this type are difficult to handle and the fiber usually requires stretching to separate the fibers prior to application.

EP-A-0118013 recognises the problem in handling glass fiber mats of this type and suggests a process in which a layered fiber glass mat is adhesively bonded to one of the facing sheets. However, such adhesive bonding is generally difficult to perform, adds to costs and may inhibit the movement of the glass fibers, on foaming.

More generally, it is know to first open up such fiber glass layered mats by passing them between stretching and opening rollers prior to application between facing sheets. This adds to the processing difficulties.

JP-A-58072443 describes a fire retardant insulating board with a glass fabric or sheet and a rigid foam core covered by facing sheets. The board required to pass fire tests is, however, expensive.

While structural laminates with fiber glass structures have fire resistant properties there is a need for an improved structural laminate which is inexpensive and easily formed in a cost effective manner whilst still providing required fire retardant properties.

There is therefore a need for an improved insulation board which will overcome at least some of these difficulties.

### Statements of Invention

According to the invention there is provided a fire retardant insulating board comprising a foam core having a facing on both faces thereof, the foam core being reinforced by a glass fiber material, wherein the glass fiber comprises a fiber glass scrim having a weight of from 8 to 24 g/m² of board.

Preferably the weight of the fiber glass scrim is from 10 to 20 g/m² of board. Ideally, the weight of the fiber glass scrim is approximately 13.6 g/m² of board.

Preferably the scrim contains from 1 to 3 threads per cm warp.

Preferably the scrim contains from 1 to 3 threads per cm weft.

In one embodiment of the invention scrim contains approximately the same number of threads per cm warp and per cm weft. Preferably, the scrim contains approximately 2 threads per cm warp and weft.

In a preferred embodiment of the invention the scrim is formed from a glass fiber of approximately 340 D'tex.

Preferably the rigid foam core is of polyisocyanurate foam formulation including polyol and isocyanurate.

In a preferred embodiment of the invention the foam formulation has an isocyanate index of NCO (isocyanate) groups of OH (polyol) groups of greater than 2.5, preferably from 3.0 to 4.5.

In a preferred embodiment the polyol is a polyester polyol.

Ideally the foam does not contain any added flame retardant.

One or both facings may comprise or contains an aluminium foil.

Alternatively one or both of the facings is of a laminate material.

The invention also provides a continuous method for producing a fire retardant insulating board comprising the steps of:-
leading a first facing from a supply reel to a lay-down bed;
leading a fibre glass scrim having a weight of from 8 to 24 g/m² of board over the first facing;
laying down a liquid foam reactant mixture onto the scrim and first facing;
leading a second facing from a supply reel over the first facing, scrim and liquid foam reactants; and
expanding the foam to form an insulating board.

Preferably the method includes the step of leading the facings with the scrim and foam reactants through a nipping means.

### Brief Description of the Drawings

The invention will be more clearly understood from the following description thereof given by way of example only, in which:-
Fig. 1 is a cross sectional view of an insulating foam board according to the invention;
Fig. 2 is a plan view of a fiber glass scrim used in the insulating board; and
Fig. 3 is a side view of an apparatus used to manufacture the board of Fig. 1.

### Detailed Description

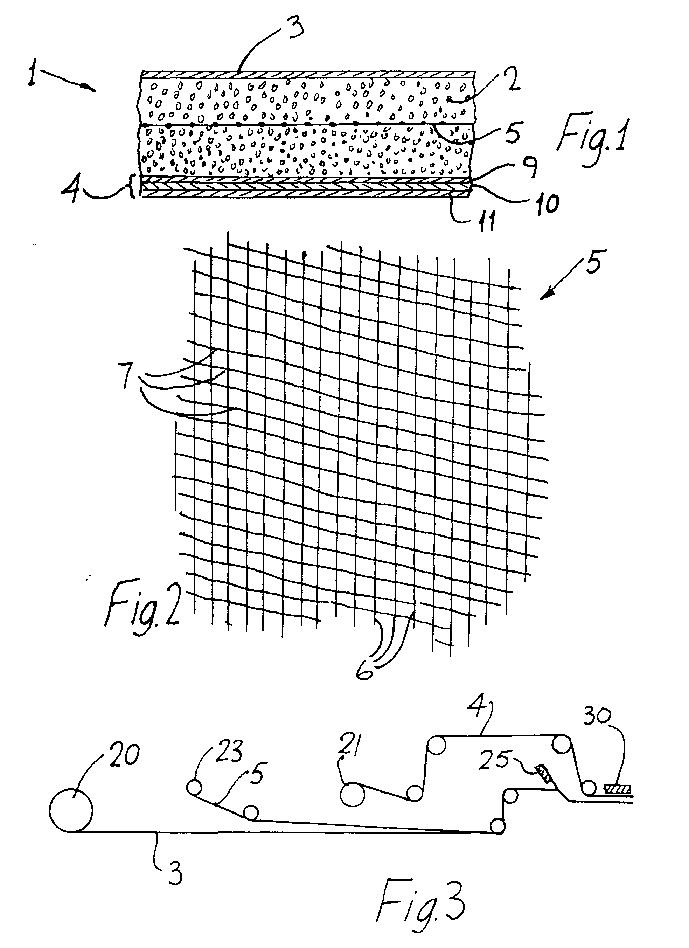

Referring to Figs. 1 and 2 there is illustrated an insulating foam board 1 according to the invention comprising an insulating core 2 of rigid foam material, having a pair of facings 3, 4. The foam core 2 is reinforced by a single layer of a fiber glass scrim 5 formed from a plurality of generally equi-spaced warp threads 6 and weft threads 7 which are interconnected to form a substantially uniform matrix as illustrated.

The scrim in this case has the following properties:

| | |
|---|---|
| Yarn Warp | 340 D'tex glass |
| | |
| Yarn Weft | 340 D'tex glass |
| | |
| Construction | 2.0 Threads per cm Warp |
| | 2.0 Threads per cm Weft |
| | |
| Binder Type | Polyinyl Alcohol |
| | |
| Yarn Weight | 13.6 g/m² |
| | |
| Binder Pick Up | 16% ± 10% |
| | |
| Total Weight | 16g/m² ± 10% |
| | |
| Thickness | 18mm Average |
| | |
| Tensile Strength | Warp 23.3 Average DN/50 mm |
| | Weft 23.5 Average DN/50 mm |

The rigid foam core is formed from a foam-forming mixture which will result in a rigid foam with fire retardant properties. Most preferred is a polyisocyanurate in which the chemical linkage is isocyanurate. Generally the foam is formed from a mixture of any suitable organic polyisocyanate and a polyol. Most preferably the polyol is a polyester polyol, preferably with a functionality of less than 3, ideally approximately 2. Suitable surfactants and blowing agents may be employed.

The foam is formed from a polyisocyanurate formulation using an excess of isocyanurate with little or no added fire retardant. The foam preferably has an index (ratio of NCO [isocyanate] groups to [polyol] OH groups) of at least 2.5, and preferably 3.0 to 4.5. The excess isocyanate groups are encouraged, by a suitable choice of catalyst, to react together to form polyisocyanurate trimers. These trimers provide strong cross-linking to enhance stiffness and strength of the reacted foam, and readily carbonise to form a refractory char on the foam surface in a fire situation. This char greatly inhibits further combustion of the foam.

The scrim is relatively lightweight of 8 to 24, preferably from 10 to 20 and ideally approximately 13.6 g/m² of board but with a structure that provides a high level of reinforcement to hold the foam together in a fire situation, especially the charred areas which tend to be brittle. Combined with a char-foaming polyisocyanurate foam formulation, the effect is to greatly enhance the fire retardance of the product.

One of the facings 3 is in this case of aluminium foil material having a thickness of between 20 and 70µm, preferably 30-40µm, ideally approximately 38µ. The other facing 4 is in this case a trilaminate comprising an inner foil layer 9, an intermediate kraft paper layer 10 and an outer foil layer 11.

Any suitable facings may be employed such as a foil facing on both faces or a trilaminate facing on both faces.

Referring to Fig. 3 there is diagrammatically illustrated apparatus for forming an insulating board according to the invention. One of the facings 3 is led from a supply reel 20 to form a lower facing and the other facing 4 is led from a supply reel 21. The fiber glass scrim 5 is provided on a reel 23 and is led to be laid on the upper face of the facing 3. Liquid foam reactants are laid down on the scrim 5 and the lower facing 3 from a lay down head 25. The other facing 4 is applied. Preferably the sandwich thus formed is passed through a nip bar 30 or nip roller to thoroughly wet out the scrim before allowing the foam to expand in an oven to form a sandwich structure as illustrated in Fig. 1. The panel thus formed is cut at a desired length in known manner. The foam lay-down, thickness control, heating and cutting are well known in the technology and do not form part of this invention.

Because the reinforcement is of scrim structure it can be readily handled as illustrated, while, at the same time providing a lightweight reinforced fire retardant foam board structure. The board is relatively inexpensive while ensuring even reinforcement across the length and width of the board. The method of manufacture is simple and relatively cheap.

### Example 1

A typical foam formulation used in the invention is as follows:

| | pph polyol(by weight) |
|---|---|
| polyester polyol | 100 |
| silicone surfactant | 2.5 |
| amine catalyst | 0.7 |
| trimerisation catalyst | 4.3 |
| water | 0.6 |
| 141b | 42.0 |
| Crude diphenyl isocyanate (MDI) (e.g.Suprasec 2085 supplied by ICI) | 150.1 |

The scrim used was as described above with a yarn weight of 13.6 g/m² of board. Both facings are of aluminium foil as described above.

A fire test was carried out in accordance with Loss Prevention Standard 1181: Issue 2, 1996 using a structure made up from a reinforced polyisocyanurate foam lining boards manufactured as described above. The nominal thickness of the boards was 60mm. The boards passed the requirements of the fire test.

A similar insulated board with the same index but without the reinforcing scrim failed the requirements of the fire test.

### Example 2

A similar board to that described in Example 1 was prepared except that the facing used on both faces was a trilaminate as described above.

The insulating board thus produced passed a fire test as set out in BS476 part 21; 1987 clause 8, when used as a part of a steel frame with a fire resistant plasterboard on the inner (furnace) side.

The invention is not limited to the embodiments hereinbefore described which may be varied in detail.

## Claims

1. A fire retardant insulating board comprising a foam core having a facing on both faces thereof, the foam core being reinforced by a glass fiber material, wherein the glass fiber comprises a fiber glass scrim having a weight of from 8 to 24 g/m² of board.

2. An insulating board as claimed in claim 1 wherein the weight of the fiber glass scrim is from 10 to 20 g/m² of board, most preferably the weight of the fiber glass scrim is approximately 13.6 g/m² of board.

3. An insulating board as claimed in any preceding claim wherein the scrim contains from 1 to 3 threads per cm warp.

4. An insulating board as claimed in any preceding claim wherein the scrim contains from 1 to 3 threads per cm weft.

5. An insulating board as claimed in any preceding claim wherein the scrim contains approximately the same number of threads per cm warp and per cm weft, preferably the scrim contains approximately 2 threads per cm warp and weft.

6. An insulated board as claimed in any preceding claim wherein the scrim is formed from a glass fiber of approximately 340 D'tex.

7. An insulating board as claimed in any preceding claim wherein the rigid foam core is of polyisocyanurate foam formulation including polyol and isocyanureate, preferably the foam formulation has an isocyanate index of NCO (isocyanate) groups of OH (polyol) groups of greater than 2.5, ideally the index is from 3.0 to 4.5.

8. An insulating board as claimed in claim 7 wherein the polyol is a polyester polyol.

9. An insulating board as claimed in any preceding claim wherein the foam does not contain any added flame retardant.

10. An insulated board as claimed in any preceding claim wherein one or both facings comprises or contains an aluminium foil.

11. An insulated board as claimed in any preceding claim wherein one or both of the facings is of a laminate material.

12. A continuous method for producing a fire retardant insulating board comprising the steps of:-
leading a first facing from a supply reel to a lay-down bed;
leading a fibre glass scrim having a weight of from 8 to 24 g/m² of board over the first facing;
laying down a liquid foam reactant mixture onto the scrim and first facing;
leading a second facing from a supply reel over the first facing, scrim and liquid foam reactants; and
expanding the foam to form an insulating board.

13. A method as claimed in claim 12 including the step of leading the facings with the scrim and foam reactants through a nipping means.
